# EUROPÄISCHE PATENTSCHRIFT

(11) **EP 3 733 367 B1**
(45) Veröffentlichungstag und Bekanntmachung des Hinweises auf die Patenterteilung: **19.01.2022**
(21) Anmeldenummer: 19171914.5
(22) Anmeldetag: 30.04.2019
(51) Int. Cl.: B27N 3/00, C08L 61/28, C08L 97/02, B27N 1/00

(54) **HOLZWERKSTOFFE UND BINDEMITTELZUSAMMENSETZUNGEN**
WOODEN MATERIAL AND BINDER COMPOSITIONS
MATÉRIAUX DÉRIVÉS DU BOIS ET COMPOSITIONS DE LIANT

(43) Veröffentlichungstag der Anmeldung: 04.11.2020
(73) Patentinhaber: Fritz Egger GmbH & Co. OG, 6380 St. Johann in Tirol (AT)
(72) Erfinder: Kuncinger, Thomas, 1200 Wien (AT)
(74) Vertreter: Cohausz & Florack

(56) Entgegenhaltungen:
- WO-A1-2018/054732
- DE-C1- 19 603 330
- JP-A- 2006 007 534
- ZA-B- 200 109 297

## Beschreibung

### TECHNISCHER BEREICH DER ERFINDUNG

Die Erfindung betrifft einen mehrschichtigen Holzwerkstoff und ein Verfahren zur Herstellung dieses Holzwerkstoffs. Ferner betrifft die Erfindung die Verwendung von Ligninsulfonat in mindestens einer Deckschicht eines mehrschichtigen Holzwerkstoffs sowie die Verwendung von Ligninsulfonat in mindestens einer Deckschicht eines mehrschichtigen Holzwerkstoffs zur Verbesserung der mechanischen Eigenschaften dieses Holzwerkstoffs.

### HINTERGUND DER ERFINDUNG

Mehrschichtige Holzwerkstoffe wie Span-, Faser- oder OSB-Platten werden durch "Verkleben" von Holzteilchen (beispielsweise Spänen, Fasern oder Strands) mit Bindemittel hergestellt. Zur Herstellung von beispielsweise Span-, Faser- oder OSB-Platten wird zunächst lignocellulosehaltiges Material in Form von Spänen, Fasern oder Strands bereitgestellt und mit Bindemittel versehen. Die beleimten Späne, Fasern oder Strands werden zu Matten gestreut, verdichtet und dann unter Einwirkung von Wärme und Druck durch in Takt- oder kontinuierlich arbeitende Pressen zu einer Platte gepresst wird. Mehrschichtige Span-, Faser- oder OSB-Platten werden hergestellt, indem mehrere Schichten in Form von Span-, Faser- oder Strandmatten übereinander gebildet und anschließend verpresst werden. In der Presse erfolgt die Aushärtung, d.h. die im Wesentlichen vollständige Vernetzung des Bindemittels bzw. der Bindemittelzusammensetzung.

Bei der Herstellung von Holzwerkstoffen kommen aufgrund ihrer Kostengünstigkeit und guten mechanischen Eigenschaften immer noch vorwiegend aminoplastbasierte Bindemittel zur Anwendung. Dies sind jedoch in der Regel formaldehydhaltige Bindemittel, sodass die damit hergestellten Holzwerkstoffe über lange Zeiträume hinweg Formaldehyd abgeben. Formaldehyd kann aber auch aus dem lignocellulosehaltigem Material selbst freigesetzt werden. Die Freisetzung von Formaldehyd ist jedoch unerwünscht, da Formaldehyd in vielen Ländern zumindest als gesundheitsgefährdend eingestuft ist oder diesbezüglich in Verdacht steht. Daher ist es erstrebenswert Holzwerkstoffe mit Hilfe von möglichst formaldehydfreien Bindemitteln herzustellen bzw. insgesamt weniger formaldeydhaltige Bindemittel zur Herstellung einzusetzen.

In der Holzwerkstoffproduktion ist derzeit nur Polyisocyanat wie PMDI eine praxisrelevante, formaldehydfreie Bindemittelalternative. Dieses kann als ausschließliches Bindemittel eingesetzt werden oder auch in Form von Misch- und Kombinationsverleimungen mit anderen Bindemitteln wie z.B. aminoplastbasierten Bindemitteln.

Nachteilig an dem Einsatz von Polyisocyanat ist, dass es als erdölbasierendes Bindemittel einen Umweltfaktor und als teurer Rohstoff einen erheblichen Kostenfaktor in der Holzwerkstoffherstellung darstellt. Demnach ist die Holzwerkstoffindustrie bestrebt, den Anteil von Polyisocyanaten in Bindemittelzusammensetzungen zur Herstellung von Holzwerkstoffen möglichst gering zu halten.

Eine Verringerung des Polyisocyanatanteils in einer polyisocyanatbasierten Bindemittelzusammensetzung geht jedoch typischerweise mit einer Verschlechterung der mechanischen Eigenschaften des damit hergestellten Holzwerkstoffs einher. Eine geringere Menge an dem "Klebstoff" Polyisocyanat zieht eine verminderte Vernetzungsreaktion nach sich, was den Grad der Verklebung des Holzwerkstoffs und damit dessen mechanische Festigkeit nachteilig beeinflusst Des Weiteren führt eine Erniedrigung des Polyisocyanatanteils in polyisocyanatbasierten Bindemittelzusammensetzungen zu einer negativen Beeinflussung weitere technischer Parameter des Holzwerkstoffs wie dessen Feuchtebeständigkeit und Quellverhalten. Daher besteht in der Holzwerkstoffindustrie seit langem ein Bedürfnis nach einem geeigneten Teilsubstitut für das teure Polyisocyanat, durch welches die Vernetzungsfähigkeit der polyisocyanatbasierten Bindemittelzusammensetzung und letztendlich die mechanische Stabilität der damit hergestellten Holzwerkstoffe nicht beeinträchtigt wird.

Im Stand der Technik wurden bereits Einsatzmöglichkeiten von Ligninen bzw. Ligninsulfonaten als Bindemittel, als Zusatz- und Streckmittel für Bindemittelzusammensetzungen und insbesondere auch als (Teil-)Substitut für Bestandteile in Bindemittelzusammensetzungen zur Herstellung von Holzwerkstoffen vorgeschlagen. Tatsächlich realisierbare und in der Praxis realisierte Einsatzmöglichkeiten für Lignine bzw. Ligninsulfonat in der Holzwerkstoffindustrie sind jedoch überraschend selten (siehe z.B. Dunky, Niemz "Holzwerkstoffe und Leime", Springer Verlag 2002, Teil I, S. 409-414). Nachteilig an der Verwendung von Ligninsulfonat zur Herstellung von Holzwerkstoffen - insbesondere unter Einsatz als alleiniges Bindemittel - ist dessen niedrige Reaktivität auf Grund der niedrigen Anzahl an reaktiven Stellen im Molekül. Um diesen Nachteil entgegenzuwirken wurde meistens eine oxidative Aktivierung des phenolischen Rings im Ligninmolekül (chemisch oder enzymatisch) vorgenommen.

Zur Herstellung von Holzwerkstoffen wurde in Bezug auf polyisocyanatbasierte Bindemittelzusammensetzungen im Stand der Technik der Einsatz von Ligninsulfonat bislang nur vereinzelt beschrieben, wobei die hergestellten Holzwerkstoffe mindestens in Bezug auf die eingesetzte ligninsulfonathaltigen Bindemittelzusammensetzung eine homogene Zusammensetzung aufwiesen, d.h. einschichtig waren.

Aus der US 4,279,788 sind Bindemittel für Holzwerkstoffe bekannt, die Polyisocyanat in einer Menge von 20-95 Gew.-%, bevorzugt 50-80 Gew.-% und ligninhaltige Calcium-, Ammonium- oder Natrium-Sulfitablauge in einer Menge von 5-80 Gew.-%, bevorzugt 20-50 Gew.-%, enthalten. Die US 4,279,788 erwähnt am Ende von Beispiel 27, dass bei der Faserplattenherstellung etwa ein Drittel des Polyisocyanatbindemittels durch Sulfitablauge ersetzt werden kann. In Beispiel 28 der US 4,279,788 wird Calcium-Sulfitablauge mit einer Präpolymeremulsion vermischt, die MDI, 50 % Polyvinylalkohol und 5 % cellulosischen Füllstoff enthält. Die daraus resultierende Bindemittelzusammensetzung weist ein Feststoffgewicht an Lignin von 25 % auf. Das lignocellulosehaltige Material in den Beispielen 27 und 28 der US 4,279,788 wurde mit der PMDI-ligninsulfonathaltigen Bindemittelzusammensetzung homogen beleimt und daraus einschichtige Platten hergestellt. Die Möglichkeit, Mehrschichtplatten mit unterschiedlichem Schichtaufbau herzustellen wird nicht erwähnt. Des Weiteren beschäftigt sich die US 4,279,788 nicht mit dem Problem, die mechanischen Eigenschaften eines Holzwerkstoffs zu optimieren bei gleichzeitiger Kosteneinsparung durch Verringerung des Polyisocyanatanteils in der Bindemittelzusammensetzung. In Beispiel 27 der US 4,279,788 ist wie erwartet eine Verschlechterung der Biegefestigkeit der Versuchsplatten bei der Verwendung von Ligninsulfonat zu beobachten.

Die US 6,524,652 B2 betrifft lagerstabile isocyanatbasierte Bindemittel für Holzwerkstoffe. Diese Bindemittel können gemäß der US 6,524,652 B2 mit diversen zusätzlichen Bindemitteln gemischt werden, u.a. wird auch Sulfitablauge genannt (siehe Sp. 4, Z. 19-34). Das Mischungsverhältnis isocyanatbasiertes Bindemittel zu zusätzlichem Bindemittel kann in weiten Bereichen variieren: von 1:10 bis 10:1 oder bevorzugt 1:5 bis 5:1. Die US 6,524,652 B2 listet Ligninsulfonat lediglich als mögliches zusätzliches Bindemittel in einer langen Liste auf. Die hergestellten Versuchsplatten (siehe Sp. 6, Z. 57 bis Sp. 7, Z.17) wurden ausschließlich mit ligninsulfonatfreien Bindemittelzusammensetzungen beleimt. US 6,524,652 B2 beschäftigt sich nicht damit, die mechanischen Eigenschaften eines Holzwerkstoffs bei gleichzeitiger Erniedrigung von Polyisocyanat in der eingesetzten Bindemittelzusammensetzung zu optimieren.

Die DE 36 44 397 C1 betrifft Bindemittel für Holzwerkstoffe, bei deren Herstellung ligninartige Abfallstoffe aus der Zellstoffherstellung (z.B. Sulfitablaugen) mit phenoloxidierenden Enzymen umgesetzt und mit einem Kunstharz als zusätzlichem Bindemittelbestandteil gemischt werden. Das Kunstharz kann ausgewählt sein aus Isocyanat-, Harnstoff-Formaldehyd- oder Melamin-Formaldehyd-Harz. Es soll in der Bindemittelzusammensetzung in einer Menge von lediglich etwa 1-15 Gew.-%, bevorzugt 3-8 Gew.-%, bezogen auf den Gesamtfeststoffgewicht der Bindemittelzusammensetzung, eingesetzt werden. In Beispiel 2 von DE 36 44 397 C1, wird PMDI als Kunstharz einsetzt, jedoch lediglich in sehr geringen Mengen (4,5 Gew.-% bezogen auf das Gesamtfeststoffgewicht der Bindemittelzusammensetzung). Weit über 90 Gew.-% der Bindemittelzusammensetzung bestehen aus Enzymkonzentrat und Ca-Sulfitablauge. Die Zugabe phenoloxidierender Enzyme aktiviert und kondensiert die Ligninsulfonate. In dem enzymatisch katalysierten Vorgang entstehen mesomere freie Radikale, die untereinander zu einem hochmolekularen, amorphen Dehydrierungspolymerisat polymerisieren. Gemäß DE 36 44 397 C1 soll eine alleinige Verwendung von Sulfitablauge und Isocyanat, d.h. ohne Enzymbeimischung, nicht zu zufriedenstellenden Platteneigenschaften führen. Damit hergestellte Platten sollen eine starke Quellung aufweisen. Beispiel 2 der DE 36 44 397 C1 beschreibt die Herstellung von dreischichtigen Spanplatten, deren Mittelschicht aus groben Spänen und deren Deckschicht aus feinen Spänen besteht. Die Späne für die verschiedenen Schichten wurden einheitlich mit der Bindemittelzusammensetzung bestehend aus PMDI, Ca-Sulfitablauge und Enzymkonzentrat beleimt. D.h. die Schichten unterschieden sich nicht in ihrer Bindemittelzusammensetzung. Auch die DE 36 44 397 C1 beschäftigt sich nicht mit dem Problem, die mechanischen Eigenschaften der hergestellten Holzwerkstoffe trotz der Verringerung des Polyisocyanatanteils in den eingesetzten Bindemittelzusammensetzungen zu optimieren.

DE19603330C1 offenbart die Oberbegriffe der Ansprüche 1 und 9.

### ZUSAMMENFASSUNG DER ERFINDUNG

Vor diesem Hintergrund und dem voranstehend erläuterten Stand der Technik bestand eine Aufgabe der Erfindung darin, einen kostengünstigen Holzwerkstoff mit guten oder sogar verbesserten mechanischen Eigenschaften bereitzustellen. Insbesondere sollte ein kostengünstiges und umweltverträgliches Additiv bzw. Teilsubstitut für polyisocyanatbasierte Bindemittelzusammensetzungen aufgefunden werden, welches trotz der Verringerung des Polyisocyanatanteils gleichbleibende oder verbesserte mechanische Eigenschaften der hergestellten Holzwerkstoffe ermöglicht. Eine weitere Aufgabe der Erfindung war es, ein einfaches, kostengünstiges und wirtschaftlich effektives Verfahren bereitzustellen, um derartige Holzwerkstoffe herzustellen.

Insgesamt ist daher die Aufgabe der Erfindung darin zu sehen, die mechanischen Eigenschaften von Holzwerkstoffen bei gleichzeitiger Erniedrigung des Bindemittelbestandteils Polyisocyanat zu erhalten oder sogar noch zu verbessern.

Diese Aufgaben werden gelöst durch den Holzwerkstoff nach Anspruch 1, das Verfahren nach Anspruch 9 und die Verwendung nach einem der Ansprüche 12 oder 13.

Der erfindungsgemäße Holzwerkstoff ist im Anspruch 1 definiert, er ist mehrschichtig und umfasst mindestens eine Mittelschicht und mindestens zwei Deckschichten. Die Mittelschicht enthält lignocellulosehaltiges Material verklebt durch eine erste Bindemittelzusammensetzung. Mindestens eine der Deckschichten enthält lignocellulosehaltiges Material verklebt durch eine zweite Bindemittelzusammensetzung, wobei die erste und zweite Bindemittelzusammensetzung unterschiedlich sind und die zweite Bindemittelzusammensetzung eine polyisocyanatbasierte Bindemittelzusammensetzung ist, die Ligninsulfonat enthält; und
- die erste Bindemittelzusammensetzung frei von Ligninsulfonat ist.

Der erfindungsgemäße Holzwerkstoff ist mit Blick auf den Stand der Technik besonders vorteilhaft, da der kostspielige Polyisocyanatanteil in der zweiten Bindemittelzusammensetzung durch eine Teilsubstitution mit Ligninsulfonat erniedrigt werden kann. Vorteilhaft an dem Einsatz von Ligninsulfonat in der zweiten Bindemittelzusammensetzung ist, dass Ligninsulfonat kostengünstig erhältlich ist und - im Gegensatz zu PMDI als erdölbasiertem Rohstoff - unmittelbar aus einem nachwachsenden biologischen Rohstoff erhalten werden kann. Der Einsatz von Ligninsulfonat ist demnach auch ressourcenschonend.

Wichtige Kenngrößen für Holzwerkstoffe sind Querzugfestigkeit, Quellung und Wasseraufnahme. Überraschenderweise wurde in praktischen Versuchen festgestellt, dass durch (ausschließlichen) Einsatz der ligninsulfonathaltigen zweiten Bindemittelzusammensetzungen in den Deckschichten des Holzwerkstoffs, die mechanische Festigkeit des Holzwerkstoffs verbessert werden kann, ohne dass es gleichzeitig zu einer erheblichen Verschlechterung der Quellung und Wasseraufnahme des Holzwerkstoffs kommt. So kann beispielsweise die Querzugfestigkeit des hergestellten Holzwerkstoffs verbessert werden. Dieser Effekt war in zweierlei Hinsicht überraschend.

Zum einen war es überraschend, dass ein Bestandteil der Bindemittelzusammensetzung der Deckschichten die Festigkeit des Holzwerkstoffs beeinflussen kann. Für die Festigkeit eines Holzwerkstoffs ist nach dem allgemeinen Fachwissen nämlich die Mittelschicht des Holzwerkstoffs maßgebend, die in der Regel bis zu zwei Drittel des lignocellulosehaltigen Materials des Holzwerkstoffs ausmacht und auch oftmals größere lignocellulosehaltige Partikel als die Deckschichten enthält. Daher geht der Fachmann davon aus, dass die Mittelschicht wesentlich darüber bestimmt, welchen mechanischen Belastungen ein Holzwerkstoff standhält.

Zum anderen war es überraschend, dass die erfindungsgemäßen Holzwerkstoffe eine verbesserte mechanische Festigkeit zeigten, obwohl in den Deckschichten ein Teil des Polyisocyanats durch Ligninsulfonat ersetzt worden war. Der erfindungsgemäße Holzwerkstoff weist demnach durch Verwendung der zweiten, ligninsulfonathaltigen Bindemittelzusammensetzung in den Deckschichten insgesamt hervorragende mechanische Eigenschaften auf.

Vorteilhaft an dem Einsatz der zweiten Bindemittelzusammensetzungen in mindestens einer Deckschicht des erfindungsgemäßen Holzwerkstoffs ist ferner, dass die zweite Bindemittelzusammensetzung eine formaldeydfreie Bindemittelzusammensetzung ist. Dadurch kann die Formaldehydemission des Holzwerkstoffs herabgesetzt werden.

Der erfindungsgemäße Holzwerkstoff ist insbesondere erhältlich nach dem hier beschriebenen erfindungsgemäßen Verfahren gemäß Anspruch 9. Dieses ist durch den Einsatz der zweiten Bindemittelzusammensetzung besonders kostengünstig, da an dem teuren Bindemittelbestandteil Polyisocyanat eingespart wird. Ein weiterer Vorteil besteht darin, dass das Ligninsulfonat das ansonsten völlig hydrophobe Polyisocyanat emulgiert und gegenüber hydrophileren Bindemittelkomponenten wie Wasser sowie dem lignocellulosischen Material kompatibilisiert. Das erfindungsgemäße Verfahren ist besonders effektiv, da sowohl die erste Bindemittelzusammensetzung als auch insbesondere die zweite Bindemittelzusammensetzung im Wesentlichen einphasig sind und daher als solche jeweils in einem einzigen Verfahrensschritt zugegeben werden können.

Vorteilhafte Ausgestaltungen der Erfindung sind in den abhängigen Ansprüchen angegeben und werden nachfolgend zusammen mit der allgemeinen erfinderischen Idee im Einzelnen erläutert.

### DETAILLIERTE BESCHREIBUNG DER ERFINDUNG

Der erfindungsgemäße Holzwerkstoff ist im Anspruch 1 definiert und umfasst eine Mittelschicht und zwei Deckschichten und enthält
- in der Mittelschicht: lignocellulosehaltiges Material verklebt durch eine erste Bindemittelzusammensetzung;
- in mindestens einer Deckschicht: lignocellulosehaltiges Material verklebt durch eine zweite Bindemittelzusammensetzung;
   wobei
- die erste und zweite Bindemittelzusammensetzung unterschiedlich sind; und
- die zweite Bindemittelzusammensetzung eine polyisocyanatbasierte Bindemittelzusammensetzung ist, die Ligninsulfonat enthält; und
- die erste Bindemittelzusammensetzung frei von Ligninsulfonat ist.

Der erfindungsgemäße Holzwerkstoff ist mehrschichtig und enthält eine Mittelschicht und zwei Deckschichten. Zusätzlich können noch weitere Schichten vorhanden sein. Vorteilhaft ist die Mehrschichtigkeit des Holzwerkstoffs, weil dadurch Eigenschaften des Holzwerkstoffs durch Veränderung einzelner Schichten gezielt optimiert, kombiniert und in unterschiedlichem Maß beeinflusst werden können. Wichtige Eigenschaften von Holzwerkstoffen stellen dabei beispielsweise die Querzugfestig, Biegefestigkeit, Wasseraufnahme und Quellung dar. In einer Ausführungsform ist der Holzwerkstoff dreischichtig, wobei Deckschicht-Mittelschicht-Deckschicht unmittelbar aufeinanderfolgen.

Wenn hier von "Mittelschicht" die Rede ist, dann ist damit eine Schicht des mehrschichtigen Holzwerkstoffs gemeint, die ein partielles Volumen des Innenbereichs des Holzwerkstoffs ausmacht. Die Schicht muss im Querschnitt nicht unbedingt exakt in der Mitte des Holzwerkstoffs liegen, dies ist üblicherweise jedoch der Fall.

Wenn hier von "Deckschicht" die Rede ist, dann ist damit eine Schicht gemeint, welche eine Außenschicht des Holzwerkstoffs bildet.

Die Mittelschicht des erfindungsgemäßen Holzwerkstoffs ist sandwichartig zwischen den zwei Deckschichten des Holzwerkstoffs eingebettet. Die Mittelschicht ist daher abzugrenzen von den Deckschichten und bildet den Kern des Holzwerkstoffs. Der Holzwerkstoff kann jedoch auch weitere Schichten abgesehen von einer Mittelschicht und zwei Deckschichten enthalten. Es können insbesondere weitere Schichten zwischen der Mittelschicht und den Deckschichten angeordnet sein. Gemäß einer bevorzugten Ausführungsform grenzen die Deckschichten direkt an die Mittelschicht an. Wenn hier von "Schicht" die Rede ist, dann ist damit eine flächige Verteilung über, unter oder zwischen einem anderen flächenhaft ausgebreiteten Material gemeint. In einer Ausführungsform ist der Holzwerkstoff mehr als dreischichtig. In einer anderen Ausführungsform ist der Holzwerkstoff fünfschichtig.

Der Holzwerkstoff kann mehrere Mittelschichten enthalten. Auch kann der Holzwerkstoff weitere Schichten über den Deckschichten aufweisen. Beispielsweise kann auf eine Deckschicht ein Overlay- oder Finish-Schicht aufgebracht sein.

Gemäß einer Ausführungsform macht eine Deckschicht des Holzwerkstoffs, insbesondere die mindestens eine Deckschicht, welche die zweite Bindemittelzusammensetzung enthält, 1 bis 40 Gew.-%, bevorzugt 5 bis 35 Gew.-% und insbesondere bevorzugt 10 bis 30 Gew.-% des Gesamtgewichts des Holzwerkstoffs aus. Gemäß einer Ausführungsform kann die Mittelschicht von 20 bis 99 Gew.-%, bevorzugt 25 bis 70 Gew.-% und insbesondere bevorzugt 30 bis 65 Gew.-% des Gesamtgewichts des Holzwerkstoffs ausmachen. Sind mehrere Mittelschichten vorhanden, beziehen sich diese Angabe auf die Summe der Mittelschichten.

Sind zwei Deckschichten vorhanden, können die Deckschichten in einer Ausführungsform insgesamt 15 bis 95 Gew.-%, bevorzugt 30 bis 90 Gew.-% und insbesondere bevorzugt 35 bis 85 Gew.-% des Gesamtgewichts des Holzwerkstoffs ausmachen.

Alternativ können die Schichten auch durch das Verhältnis der Schichtdicken des Holzwerkstoffs definiert werden. Der Holzwerkstoff ist typischerweise eine Holzwerkstoffplatte. Bei einer erfindungsgemäßen mehrschichtigen Holzwerkstoffplatte kann die Mittelschicht 5 bis 99 %, bevorzugt 10 bis 70 % und insbesondere bevorzugt 20 bis 65 % der Gesamtplattendicke, gemessen entlang der Querachse der Holzwerkstoffplatte, ausmachen. Eine Deckschicht kann 1 bis 40 Gew.-%, bevorzugt 5 bis 35 Gew.-% und insbesondere bevorzugt 10 bis 30 Gew.-% der Gesamtplattendicke, gemessen entlang der Querachse der Holzwerkstoffplatte ausmachen. Der Begriff "Querachse", wie hierin verwendet, bezeichnet diejenige Achse, die senkrecht zur größten Oberfläche der Holzwerkstoffplatte verläuft. Es handelt sich hierbei um einen klassischen Querschnitt. Die vorstehenden %-Angaben beziehen sich demnach auf den Anteil den die jeweiligen Schichten in Bezug auf die Gesamtplattendicke im Plattenquerschnitt ausmacht.

Die Mittelschicht und die Deckschichten des erfindungsgemäßen Holzwerkstoffs unterscheiden sich in ihrer Zusammensetzung, insbesondere hinsichtlich der darin enthaltenen Bindemittelzusammensetzung. Der erfindungsgemäße Holzwerkstoff enthält in der Mittelschicht lignocellulosehaltiges Material, das durch eine erste Bindemittelzusammensetzung verklebt ist und in den Deckschichten lignocellulosehaltiges Material, das durch eine zweite Bindemittelzusammensetzung verklebt ist. Wenn hier von "Verkleben" die Rede ist, dann ist damit das Verbinden von Materialien, insbesondere von lignocellulosehaltigem Material, durch einen "Klebstoff, nämlich die Bindemittelzusammensetzung, gemeint. Die erste und die zweite Bindemittelzusammensetzung unterscheiden sich in ihrer Zusammensetzung. Die zweite Bindemittelzusammensetzung basiert auf Polyisocyanat und enthält Ligninsulfonat. Die Mittelschicht und die Deckschichten des erfindungsgemäßen Holzwerkstoffs unterscheiden sich daher mindestens in ihrer Verklebung auf Grund der Verwendung unterschiedlicher Bindemittelzusammensetzungen.

In einer weiteren Ausführungsform unterscheiden sich die Mittelschicht und die Deckschichten in ihrer Dichte. In einer bevorzugten Ausführungsform weist die Mittelschicht eine geringere Dichte auf als die mindestens eine Deckschicht des Holzwerkstoffs. In einer weiteren bevorzugten Ausführungsform weist die Mittelschicht eine höhere Porosität als die mindestens eine Deckschicht auf. Wenn hier von "Porosität" die Rede ist, dann ist damit gemeint, dass eine Schicht Hohlräume bzw. Poren aufweist. Die Porosität ist eine dimensionslose Messgröße, die sich aus dem Verhältnis von Hohlraumvolumen zu Gesamtvolumen ergibt. Die Porosität einer Schicht des Holzwerkstoffs setzt sich zusammen aus der Summe der Hohlräume, die untereinander und mit der Umgebung in Verbindung stehen (offene Porosität) und den nicht miteinander verbundenen Hohlräumen (geschlossene Porosität).

Die Mittelschicht und die Deckschichten können sich aber auch zusätzlich voneinander unterscheiden, z.B. durch das eingesetzte lignocellulosehaltige Material, welches in unterschiedlicher Größe, Dichte und/oder Beschaffenheit in Mittel- und Deckschicht vorliegen kann. In den Mittel- und Deckschichten können beispielsweise lignocellulosehaltige Materialien unterschiedlichen Ursprungs (z.B. Laubholz, Nadelholz oder unterschiedliche Mischungen hieraus) eingesetzt werden. Des Weiteren kann das lignocellulosehaltige Material in den Mittel- und Deckschichten in unterschiedlicher Form vorliegen. Vorzugsweise liegt es jedoch in der gleichen Form vor. Die Form des lignocellulosehaltigen Materials kann insbesondere ausgewählt sein aus der Gruppe bestehend aus Holzmehl, Holzfasern, Holzspänen, Holzstrands und Hackschnitzeln. In der Mittelschicht können beispielsweise Holzspäne eingesetzt werden, während in den Deckschichten Holzmehl verwendet wird. Es können in der Mittelschicht und den Deckschichten des erfindungsgemäßen Holzwerkstoffs beispielsweise aber auch unterschiedlich große lignocellulosehaltige Partikel (z.B. unterschiedliche große Holzspäne oder Holzstrands) eingesetzt werden.

Auch die beiden Deckschichten des Holzwerkstoffs können sich beispielsweise in der Art und Beschaffenheit des darin verwendeten lignocellulosehaltigen Materials oder Bindemittels unterschieden. In einer Ausführungsform enthält nur eine Deckschicht des erfindungsgemäßen Holzwerkstoffs die zweite Bindemittelzusammensetzung, d.h. nur eine Deckschicht wurde mit der zweiten Bindemittelzusammensetzung verklebt. Die andere Deckschicht kann mit der erste Bindemittelzusammensetzung oder einer anderen, vorzugsweise formaldehydfreien, Bindemittelzusammensetzung verklebt sein. In einer bevorzugten Ausführungsform sind beide Deckschichten mit der zweiten Bindemittelzusammensetzung verklebt.

Das lignocellulosehaltige Material des erfindungsgemäßen Holzwerkstoffs besteht vorzugsweise aus Holz oder ist ein holzenthaltendes Material. Gemäß einer bevorzugten Ausführungsform wird das lignocellulosehaltige Material in Form von Holzpartikeln bereitgestellt, d. h. es kann Holzpartikel enthalten oder daraus bestehen. Holzpartikel, wie hier verwendet, können Holz enthalten oder aus Holz bestehen. Beispiele für Holzpartikel sind feinteiliges Holzmaterial, Holzspäne, Holzstrands, Holzfasern, Holzwafer, Holzflakes und Hackschnitzel.

Wenn hier von "lignocellulosehaltigem Material" die Rede ist, ist damit pflanzliches Material gemeint, das Lignocellulose enthält. Lignocellulose im Sinne der Erfindung enthält Cellulose und/oder Hemicellulose sowie Lignin. Vorzugsweise handelt es sich bei dem lignocellulosehaltigen Material um holzenthaltendes Material oder Holz.

"Cellulose" ist ein unverzweigtes Polysaccharid, das aus mehreren hundert bis zehntausend Cellobiose-Einheiten besteht. Diese Cellobiose-Einheiten bestehen wiederum aus zwei Molekülen Glucose, die über eine β-1,4-glykosidische Bindung verknüpft sind.

"Hemicellulose" ist eine Sammelbezeichnung für verschiedene Bestandteile pflanzlicher Zellwände. Bei den Hemicellulosen handelt es sich um verzweigte Polysaccharide mit einer geringeren Kettenlänge - üblicherweise weniger als 500 Zuckereinheiten - welche aus verschiedenen Zuckermonomeren aufgebaut sind. Hemicellulose ist im Wesentlichen aus verschiedenen Zuckermonomeren, wie beispielsweise Glucose, Xylose, Arabinose, Galactose und Mannose, aufgebaut, wobei die Zucker Acetyl- sowie Methylsubstituierte Gruppen aufweisen können. Sie besitzen eine zufällige, amorphe Struktur und sind gut hydrolysierbar. Xylose bzw. Arabinose besteht aus Zuckermonomeren mit fünf Kohlenstoffatomen (Pentosen). Mannose bzw. Galactose besteht hauptsächlich aus Zuckermonomeren mit sechs Kohlenstoffatomen (Hexosen).

"Lignine" sind amorphe, unregelmäßig verzweigte aromatische Makromoleküle, welche in der Natur als Bestandteil von Zellwänden vorkommen und dort die Verholzung (Lignifizierung) der Zelle bewirken. Sie sind aus substituierten Phenylpropanol-Einheiten aufgebaut, zeigen einen lipophilen Charakter und sind bei Zimmertemperatur in neutralen Lösemitteln, wie beispielsweise Wasser, unlöslich. Vorläufersubstanzen von Lignin sind beispielsweise p-Coumaryl-Alkohol, Coniferyl-Alkohol und Sinapyl-Alkohol. Die Molmassen von Lignin liegen üblicherweise zwischen 10000 und 20000 g/mol.

Der erfindungsbemäße Holzwerkstoff enthält lignocellulosehaltiges Material und ein Reaktionsprodukt einer ersten und zweiten Bindemittelzusammensetzung.

Die Mittelschicht des erfindungsgemäßen Holzwerkstoffs enthält lignocellulosehaltiges Material und ein Reaktionsprodukt der ersten Bindemittelzusammensetzung. Die mindestens eine Deckschicht enthält lignocellulosehaltiges Material und ein Reaktionsprodukt der zweiten Bindemittelzusammensetzung. Wenn hier oder an anderer Stelle von "Reaktionsprodukt" die Rede ist, dann ist damit das Produkt der Reaktion der Bindemittelbestandteile mit sich selbst und dem lignocellulosehaltigen Material, d.h. das Produkt der Vernetzungsreaktion, gemeint.

Durch die Nachweisbarkeit der Bestandteile Polyisocyanat und Ligninsulfonat, bzw. die Nachweisbarkeit deren Reaktionsprodukte, kann der Fachmann erfindungsgemäße Holzwerkstoffe einfach von den aus dem Stand der Technik bekannten Holzwerkstoffen unterscheiden.

Der erfindungsgemäße Holzwerkstoffe ist insbesondere erhältlich nach dem hier beschriebenen erfindungsgemäßen Verfahren.

Wenn hier von "Holzwerkstoff" die Rede ist, so sind damit alle Werkstoffe gemeint, die lignocellulosisches Material, insbesondere Holz, enthalten. Holzwerkstoffe im Sinne der Erfindung sind insbesondere ausgewählt aus der Gruppe bestehend aus Spanplatte, OSB-Platte, Faserplatte und einem furnierbasierender Holzwerkstoff. Erfindungsgemäße Holzwerkstoffe sind insbesondere Span- oder Faserplatten. Erfindungsgemäße Holzwerkstoffe lassen sich besonders gut zur Herstellung eines Laminats, Bodenbelags, einer Arbeitsplatte, Tischplatte oder eines Möbelstücks verwenden.

Gemäß einer Ausführungsform handelt es sich bei dem erfindungsgemäßen Holzwerkstoff um einen Holzspanwerkstoff, insbesondere eine Span- oder OSB-Platte. Wenn hier von "Spanplatte" die Rede ist, dann werden darunter Spanplatten im weiteren Sinne verstanden, nämlich Holzwerkstoffe, die aus spanend hergestellten Holzpartikeln und mindestens einem Bindemittel mittels Wärme und Druck hergestellt werden. Eine andere Produktgruppe im Bereich der Holzwerkstoffe, die nicht von dem Begriff "Holzspanwerkstoff' oder "Spanplatte" wie hier verwendet umfasst ist, stellen die Holzfaserwerkstoffe dar. Zu letzteren gehören Faserplatten, wie beispielsweise die mitteldichten (MDF) und hochdichten (HDF) Faserplatten.

Grundsätzlich kennt der Fachmann unterschiedliche Holzspanwerkstoffe. Beispiele hierfür sind Spanplatten, Flachpressplatten, Mehrschichtplatten, leichte Flachpressplatten, Strangpressplatten, Strangpressröhrenplatten (ET - Extruded Tubular), Strangpressvollplatten (ES - Extruded Solid), kunststoffbeschichtete dekorative Flachpressplatten (MFB - Melamine Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB-Platten können gemäß ihrer Verwendung nach EN 300 eingeteilt werden. Solche Holzspanwerkstoffe können beispielsweise zu Laminaten, Bodenbelägen, Arbeitsplatten, Tischplatten, Paletten und/oder Holzformteilen weiterverarbeitet werden.

Gemäß einer Ausführungsform ist der Holzwerkstoff eine Holzspanwerkstoffplatte. Vorzugsweise ist der Holzwerkstoff eine Span- oder OSB-Platte. Gemäß einer anderen Ausführungsform handelt es sich bei dem Holzwerkstoff um eine Faserplatte. Üblicherweise werden die Holzpartikel für Holzspanwerkstoffe durch schneidende Verfahren gewonnen, jene für Holzfaserstoffe durch Zerfaserung.

Der erfindungsgemäße Holzwerkstoff besteht vorzugsweise im Wesentlichen aus lignocellulosehaltigem Material und der ersten und zweiten Bindemittelzusammensetzung. "Im Wesentlichen" bedeutet hierbei zu über 70 Gew.-%, 85 Gew.-%, 95 Gew.-% oder 97 Gew.-%, jeweils bezogen auf das Gesamtgewicht des Holzwerkstoffs.

Es ist jedoch auch möglich, dass der Holzwerkstoff weitere Stoffe enthält. Beispielsweise können Netz- und/oder Trennmittel für einen verbesserten Pressvorgang zugesetzt werden. Weiterhin können Pilzschutzmittel oder Feuerschutzmittel sowie Füllstoffe zugesetzt werden.

### Erste Bindemittelzusammensetzung

Die erste Bindemittelzusammensetzung ist in der Mittelschicht des erfindungsgemäßen Holzwerkstoffs enthalten. In einer weiteren Ausführungsform enthält die Mittelschicht des Holzwerkstoffs ein Reaktionsprodukt der ersten Bindemittelzusammensetzung.

In einer Ausführungsform ist die erste Bindemittelzusammensetzung eine polyisocyanatbasierte oder aminoplastbasierte Bindemittelzusammensetzung oder ein Mischsystem hieraus.

In einer bevorzugten Ausführungsform, ist die erste Bindemittelzusammensetzung eine formaldehydfreie, insbesondere eine polyisocyanatbasierte Bindemittelzusammensetzung. "Polyisocyanatbasiert" bedeutet, dass Polyisocyanat den größten Feststoffanteil in der Bindemittelzusammensetzung ausmacht. Die erste Bindemittelzusammensetzung kann 30 bis 97 Gew.-% Polyisocyanat, bezogen auf das Gesamtfeststoffgewicht der Bindemittelzusammensetzung, enthalten. Besonders praxisgerechte Ergebnisse stellen sich ein, wenn die erste Bindemittelzusammensetzung Polyisocyanat, jeweils bezogen auf das Gesamtfeststoffgewicht der Bindemittelzusammensetzung, in einer Menge von 40 bis 95 Gew.-% oder noch bevorzugter 45 bis 90 Gew.-% enthält.

In einer anderen Ausführungsform enthält die erste Bindemittelzusammensetzung 1 bis 10 Gew.-% Polyisocyanat bezogen auf das Trockengewicht des lignocellulosehaltigen Materials für die Mittelschicht. Besonders praxisgerechte Ergebnisse stellen sich ein, wenn die erste Bindemittelzusammensetzung Polyisocyanat, jeweils bezogen auf das Trockengewicht des lignocellulosehaltigen Materials für die Mittelschicht, in einer Menge von 1,5 bis 8 Gew.-% oder noch bevorzugter 2,5 bis 6 Gew.-% enthält.

In einer weiteren Ausführungsform, ist das Polyisocyanat ein aromatisches Polyisocyanat, insbesondere ausgewählt aus der Gruppe bestehend aus Diphenylmethandiisocyanat (MDI) und polymeren Diphenylmethandiisocyanat (PMDI).

Wenn hier allgemein von "Polyisocyanaten" die Rede ist, so sind damit monomere und/oder oligomere Polyisocyanate gleichermaßen gemeint. Vorzugsweise ist das Polyisocyanat ein aromatisches Polyisocyanat. Besonders gute Ergebnisse lassen sich mit PMDI als Polyisocyanat erzielen.

In einer anderen Ausführungsform ist die erste Bindemittelzusammensetzung aminoplastbasiert. Wenn hier von "aminoplastbasierter" Bindemittelzusammensetzung die Rede ist, dann ist damit gemeint, dass das Aminoplastharz den größten Feststoffanteil in der Bindemittelzusammensetzung ausmacht. Besonders praxisgerechte Ergebnisse stellen sich ein, wenn die erste Bindemittelzusammensetzung, jeweils als Feststoffgewicht bezogen auf das Gesamtfeststoffgewicht der Bindemittelzusammensetzung, Aminoplastharz in einer Menge von 80 bis 97 Gew.-%, bevorzugt von 85 bis 95 Gew.-%, und besonders bevorzugt von 90 bis 95 Gew.-% enthält. Ferner stellen sich besonders praxisgerechte Ergebnisse ein, wenn die Bindemittelzusammensetzung, jeweils bezogen auf das Trockengewicht des lignocellulosehaltigen Materials, Aminoplastharz in einer Menge von 1 bis 20 Gew.-%, bevorzugt von 3 bis 15 Gew.-%, und besonders bevorzugt von 4 bis 14 Gew.-% enthält.

Aminoplastharze sind Kondensationsharze. Diese härten durch Kondensationsreaktionen aus, bei denen oftmals Wasser abgespalten wird. Aminoplastharze sind dem Fachmann bekannt und z.B. in "Ullmanns Enzyklopädie der technischen Chemie", 4. Auflage, Band 7, S. 403ff. beschrieben. Aminoplastharze können durch Kondensation eines Amino-, Imino- oder Amidgruppen enthaltenden Bestandteils mit einer Carbonylverbindung erhalten werden. Häufige Ausgangsmaterialien für Aminoplastharze sind beispielsweise Harnstoff und/oder Melamin (als Aminogruppen enthaltender Bestandteil) und Formaldehyd (als Carbonylverbindung). Harze, die aus Harnstoff und Formaldehyd gebildet werden, bezeichnet man auch als Harnstoffformaldehydharz. Harze, die aus Melamin und Formaldehyd gebildet werden, bezeichnet man als Melaminformaldehydharz. In einer Ausführungsform ist das Aminoplastharz ausgewählt aus der Gruppe bestehend aus Harnstoff-Formaldehyd-Harz (UF), Melamin-Formaldehyd (MF), Melamin-Harnstoff-Formaldehyd-Harz (MUF), Melamin-Phenol-Formaldehyd (MPF), Melamin-Harnstoff-Phenol-Formaldehyd-Harz (MUPF) und Mischungen hiervon.

Wenn hier oder an anderer Stelle von Aminoplastharz die Rede ist, dann ist damit nicht nur das Kondensationsprodukt, also der eigentliche Aminoplast, gemeint, sondern primär auch die zugrundeliegenden Aminoplastharzzusammensetzungen, welche die Ausgangsstoffe zur Herstellung eines Aminoplasten, also mindestens einen Amino-, Imino- oder Amidgruppen enthaltenden Bestandteil und mindestens eine Carbonylverbindung, sowie ggf. Vorkondensate enthalten. Derartige Aminoplastharzzusammensetzungen enthalten typischerweise Wasser. So liegt das Aminoplastharz gemäß einer Ausführungsform in einer wässrigen Lösung oder Dispersion vor.

Wenn hier von Gew.-% im Zusammenhang mit Bindemittelzusammensetzungen die Rede ist, so sind, soweit nichts anderes angegeben ist, die Gew.-%-Angaben auf das Gesamtfeststoffgewicht der Bindemittelzusammensetzung bezogen. Dies bedeutet das Feststoffgewicht eines einzelnen Bestandteils ist bezogen auf das Gesamtfeststoffgewicht der Bindemittelzusammensetzung. Letzteres ergibt sich rechnerisch durch Subtraktion des Lösungsmittelanteils (zumeist Wasser) vom Gesamtgewicht der Bindemittelzusammensetzung. In einer bevorzugten Ausführungsform bedeutet "bezogen auf den Gesamtfeststoffgewicht der Bindemittelzusammensetzung" insbesondere "bezogen auf das Gesamtgewicht (Feststoff) der in der Bindemittelzusammensetzung enthaltenen Bestandteile", d.h. nur auf die Summe der Feststoffmengen der Bestandteile.

Alternativ kann die Bindemittelzusammensetzung auch - wie in der Holzwerkstoffindustrie ebenfalls üblich - auf das Trockengewicht des lignocellulosehaltigen Materials bezogen werden, auf welches die Bindemittelzusammensetzung aufgebracht wird.

Es ist zur Erzielung des erfindungsgemäßen Effektes ausreichend, wenn lediglich mindestens eine Deckschicht durch Verwendung der zweiten Bindemittelzusammensetzung Ligninsulfonat enthält.

Erfindungsgemäß ist die erste Bindemittelzusammensetzung frei von Ligninsulfonat.

Durch Einsatz der ersten Bindemittelzusammensetzung zur Verklebung der Mittelschicht ist der erfindungsgemäße Holzwerkstoff im Kern bzw. der Mittelschicht frei von Ligninsulfonat. Dies hat den Vorteil, dass die mechanischen Eigenschaften durch Bewahrung beispielsweise eines rein polyisocyanatgebundenen Kerns weiter verbessert werden können.

### Zweite Bindemittelzusammensetzung

Die zweite Bindemittelzusammensetzung ist eine polyisocyanatbasierte Bindemittelzusammensetzung. Polyisocyanatbasiert" bedeutet wiederum, dass Polyisocyanat den größten Feststoffanteil in der Bindemittelzusammensetzung ausmacht. In einer Ausführungsform enthält die zweite Bindemittelzusammensetzung, bezogen auf das Gesamtfeststoffgewicht der Bindemittelzusammensetzung, 30 bis 95 Gew.-% Polyisocyanat oder 1 bis 10 Gew.-% Polyisocyanat bezogen auf das Trockengewicht des lignocellulosehaltigen Materials für die mindestens eine Deckschicht. Besonders praxisgerechte Ergebnisse stellen sich ein, wenn die zweite Bindemittelzusammensetzung Polyisocyanat, jeweils bezogen auf das Gesamtfeststoffgewicht der Bindemittelzusammensetzung, in einer Menge von 40 bis 85 Gew.-% oder noch bevorzugter 50 bis 75 Gew.-% enthält. Bezogen auf das Trockengeweicht des lignocellulosehaltigen Materials für die mindestens eine Deckschicht bedeutet dies, dass sich besonders praxisgerechte Ergebnisse einstellen, wenn die zweite Bindemittelzusammensetzung Polyisocyanat in einer Menge von 1,5 bis 8 Gew.-% oder noch bevorzugter 2,5 bis 6 Gew.-% enthält.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=0) enthalten. Einfachste und wichtigste Vertreter dieser Polyisocyanate sind die Diisocyanate. Diese haben die allgemeinen Struktur 0=C=N-R-N=C=0, wobei R üblicherweise für aliphatische, alicyclische und/oder aromatische Reste steht. Vorzugsweise ist R ein aromatischer Rest oder umfasst R einen aromatischen Rest.

Polyisocyanate reagieren wegen der Mehrfachfunktionalität (≥ 2 Isocyanatgruppen) in Abhängigkeit von Reaktionsbedingungen und -partnern zu einer Vielzahl von Polymeren (z. B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur).

Polymeres Diphenylmethandiisocyanat (PMDI) auch "technisches MDI" genannt, ist ein Stoffgemisch aus MDI (in Form seiner Isomere 4,4'-, 2,4'- und 2,2'-MDI) und homologen längerkettigen aromatischen Polyisocyanaten. Die Bezeichnung "polymeres Diphenylmethandiisocyanat" ist fachlich nicht ganz richtig, da es sich nicht um ein Polymer, sondern um ein Stoffgemisch aus Verbindungen mit mehreren (typischerweise bis 6) Phenylengruppen handelt, die je eine Isocyanatgruppe tragen. Häufige Handelsbezeichnung ist auch Polymethylenpolyphenylisocyanat.

PMDI wird seit mehr als 30 Jahren erfolgreich als Bindemittel in Holzwerkstoffplatten, insbesondere bei OSB-Platten eingesetzt und ist ein Ausgangsstoff zur Herstellung von Isocyanat- und Polyurethanbindemitteln (siehe z.B. Dunky, Niemz "Holzwerkstoffe und Leime", Springer Verlag 2002, Teil I, S. 385-394). Reines PMDI zeichnet sich vor allem durch ein sehr gutes Benetzungsverhalten von Holzoberflächen im Vergleich zu Aminoplast-basierten wässrigen Bindemitteln aus. So sind bei PMDI bereits Beleimgrade von 3-4 Gew.-% Feststoff bezogen auf atro Holz ausreichend, während Aminoplastbasierte Bindemittel üblicherweise erst bei Beleimgraden von 8-10 Gew.-% Feststoff bezogen auf atro Holz zufriedenstellende Ergebnisse liefern.

Polyisocyanate zeichnen sich durch ihre hohe Reaktivität gegenüber allen Verbindungen aus, die aktiven Wasserstoff enthalten. Eine wesentliche Härtungsreaktion verläuft mit Wasser zur Amidbildung unter gleichzeitiger Abspaltung von CO₂. Das Amid kann mit weiteren Isocyanatgruppen u.a. zu Polyharnstoffstrukturen weiterreagieren. Die Härtung von reinen PMDI Harzen benötigt daher Wasser, welches entweder getrennt oder gemeinsam mit dem PMDI aufgebracht wird (Besprühung des lignocellulosehaltigen Materials mit einer wässrigen PMDI-Dispersion) oder im Holz in ausreichender Menge als Feuchtigkeit vorliegt.

Die zweite Bindemittelzusammensetzung enthält als weiteren erfindungsgemäßen Bestandteil Ligninsulfonat. Gemäß einer Ausführungsform enthält die zweite Bindemittelzusammensetzung zwischen 1 und 50 Gew.-% Ligninsulfonat, bezogen auf das Gesamtfeststoffgewicht der Bindemittelzusammensetzung oder 0,05 bis 3 Gew.-% Ligninsulfonat bezogen auf das Trockengewicht des lignocellulosehaltigen Materials für die mindestens eine Deckschicht. Besonders praxisgerechte Ergebnisse stellen sich ein, wenn die zweite Bindemittelzusammensetzung Ligninsulfonat, jeweils bezogen auf das Gesamtfeststoffgewicht der Bindemittelzusammensetzung, in einer Menge von 1 bis 40 Gew.-% oder noch bevorzugter 1 bis 35 Gew.-% enthält. Bezogen auf das Trockengeweicht des lignocellulosehaltigen Materials für die mindestens eine Deckschicht bedeutet dies, dass sich besonders praxisgerechte Ergebnisse einstellen, wenn die zweite Bindemittelzusammensetzung Ligninsulfonat in einer Menge von 0,05 bis 2,5 Gew.-% oder noch bevorzugter 0,05 bis 2 Gew.-% enthält.

Die der Erfindung zugrundeliegenden Forschungsergebnisse haben gezeigt, dass durch den Einsatz von Ligninsulfonat in der zweiten Bindemittelzusammensetzung die Menge an PMDI um bis zu ca. 50% (abhängig vom Holzwerkstoff um 1-50%) reduziert werden kann. Das Ligninsulfonat kann demnach sogar bis zu 50 Gew.-% bezogen auf den Gesamtfeststoffanteil der Bindemittelzusammensetzung ausmachen. Darüber hinausgehende Ligninsulfonatanteile sind zwar möglich, führen aber in der Regel nicht zu praxisgerechten Ergebnissen. Vorteilhaft ist der Einsatz der zweiten Bindemittelzusammensetzung in den Deckschichten des erfindungsgemäßen Holzwerkstoffs dadurch, dass dieser zu einer verbesserten Querzugfestigkeit des Holzwerkstoffs führt, d.h. eine verbesserte mechanische Stabilität des Holzwerkstoffs ermöglicht.

In einer Ausführungsform ist die zweite Bindemittelzusammensetzung in einer Deckschicht des erfindungsgemäßen Holzwerkstoffs enthalten. In der anderen Deckschicht kann dann die erste Bindemittelzusammensetzung oder eine anderweitige, vorzugsweise formaldehydfreie, Bindemittelzusammensetzung enthalten sein. In einer weiteren Ausführungsform ist die zweite Bindemittelzusammensetzung in den beiden Deckschichten des erfindungsgemäßen Holzwerkstoffs enthalten.

Gemäß einer Ausführungsform liegt die zweite Bindemittelzusammensetzung als fein dispergierte Dispersion, insbesondere Emulsion vor. Gemäß einer weiteren Ausführungsform liegt die zweite Bindemittelzusammensetzung als Lösung oder im Wesentlichen einphasige Zusammensetzung vor. Im Wesentlichen einphasig bedeutet dabei, dass mit dem bloßen Auge keine Phasentrennung feststellbar ist. In der Praxis kann es sich dabei nichtsdestotrotz um mikroskopisch fein dispergierte Emulsion bzw. Dispersion handeln. Ohne an eine bestimmte wissenschaftliche Theorie gebunden sein zu wollen, scheint das Ligninsulfonat über freie OH-Gruppen mit dem Polyisocyanat zu reagieren und überraschenderweise so als Emulgator zu wirken zwischen einer ersten Phase, die zumeist wässrigen ligninsulfonathaltige Phase, und einer zweiten Phase, der hydrophoben, öligen Polyisocyanatphase. Die beiden Phasen sind ohne Zugabe eines Emulgators bzw. Phasenvermittlers nicht oder schlecht miteinander mischbar. Typischerweise ist die ligninsulfonathaltige Phase eine hydrophile, insbesondere wässrige, Phase und die Polyisocyanatphase eine hydrophobe Phase.

Ein "Emulgator" im Sinne der Offenbarung bewirkt, dass mindestens zwei nicht oder schlecht miteinander mischbare Phasen zu einem feinverteilten Gemisch (einer Dispersion) vermengt und stabilisiert werden. Das Ligninsulfonat emulgiert dabei die ölige, hydrophobe Polyisocyanatphase mit der hydrophilen Phase, die das Ligninsulfonat selbst enthält und üblicherweise eine wässrige Phase ist.

Dispersionen bzw. disperse Systeme sind dem Fachmann grundsätzlich bekannt (vgl. "Pharmazeutische Technologie", Voigt, Deutscher Apotheker Verlag Stuttgart, 2000, S. 81 ff). "Dispersion" bezeichnet ein System aus mindestens zwei Phasen, von denen mindestens eine Phase eine kontinuierliche Phase, ein sogenanntes Dispersionsmittel, und mindestens eine weitere darin verteilte Phase, eine sogenannte disperse oder dispergierte Phase oder Dispergens, ist (vgl. auch DIN EN ISO 862:1995-10). Die kontinuierliche Phase kann flüssig, fest oder in einer Mischung daraus vorliegen. Wenn hier oder anderer Stelle von "flüssig" die Rede ist, dann sind damit bei Raumtemperatur (25 °C) und Normaldruck (1 atm) flüssige Lösungen und/oder Dispersionen gemeint. Wenn nicht anders angegeben, sind alle hier genannten Werte bei Normaldruck (1 atm) gemessen. Die disperse Phase kann flüssig, fest oder in einer Mischung daraus (d.h. flüssig-fest) vorliegen. Vorzugsweise ist auch die disperse Phase flüssig oder flüssig-fest. Üblicherweise handelt liegt die zweite Bindemittelzusammensetzung als eine fein dispergierte Emulsion vor.

Die disperse Phase liegt dabei fein dispergiert in der kontinuierlichen Phase vor. Wenn hier von "fein dispergiert" die Rede ist, dann ist damit eine kolloidal disperse Verteilung (Partikeldurchmesser der dispersen Phase durchschnittlich 1 nm bis 1 µm) und/oder eine grob disperse Verteilung (Partikeldurchmesser der dispersen Phase durchschnittlich größer als 1 µm) der Partikel der dispersen Phase gemeint. Dem Fachmann sind verschiedene Definitionen von "Partikeldurchmesser" und Verfahren zur Bestimmung des Partikeldurchmessers bekannt (vgl. "Pharmazeutische Technologie", Voigt, Deutscher Apotheker Verlag Stuttgart, 2000, S. 29 ff). Wenn hier von "Partikeldurchmesser" die Rede ist, dann wird hierunter der durchschnittliche Durchmesser des flächengleichen Kreises verstanden.

Ein weiterer Vorteil des Einsatzes von Ligninsulfonat in der zweiten Bindemittelzusammensetzung ist, dass Ligninsulfonat überraschenderweise nicht nur als Emulgator, sondern auch als Reaktivphasenvermittler zu wirken scheint. Wenn hier von "Reaktivphasenvermittler" die Rede ist, dann ist damit ein Phasenvermittler gemeint, der durch kovalente Reaktionen an der Phasengrenzfläche für eine Kopplung und Kompatibilisierung, und damit einhergehend für eine bessere Phasendurchmischung, von mindestens zwei ursprünglich schlecht oder nicht miteinander mischbaren Phasen sorgt. Der Vorteil der Reaktivphasenvermittlung liegt darin, dass aufgrund der Durchmischung der Polyisocyanatphase und der ligninsulfonathaltigen Phase optimale weitere Reaktionsmöglichkeiten zwischen den in den beiden Phasen vorhandenen Reaktionspartnern entstehen, d.h. insbesondere zwischen Ligninsulfonat und Polyisocyanat, da eine Erhöhung der Phasengrenzfläche, und damit Reaktionsoberfläche, stattgefunden hat. Ohne an eine wissenschaftliche Theorie gebunden sein zu wollen, scheint es durch die Reaktivphasenvermittlung des Ligninsulfonats förderlich, dass weiteres Ligninsulfonat während der Vernetzungsreaktion der Bindemittelzusammensetzung mit dem Polyisocyanat reagiert und somit in hohem Maß zum Vernetzungsprodukt beiträgt. Die seitens Ligninsulfonat bereitgestellte Vernetzungsfähigkeit scheint überraschenderweise dabei die Erniedrigung des Polyisocyanatanteils in der zweiten Bindemittelzusammensetzung zu kompensieren.

Des Weiteren ist der Einsatz von Ligninsulfonat in der zweiten Bindemittelzusammensetzung auch deswegen vorteilhaft, weil damit ein erdölbasierter Rohstoff (PMDI) durch einen aus nachwachsenden Rohstoffen gewonnenen und als Abfallprodukt anfallenden Rohstoff (Ligninsulfonat) ersetzt wird. Ligninsulfonat fällt in großen Mengen als wässriges Abfallprodukt bei der Zellstoffherstellung nach dem Sulfitverfahren an. Deshalb besteht grundsätzlich ein großes Interesse an Verwertungsmöglichkeiten.

Das Sulfitverfahren ist ein großtechnisch angewandter chemisch-industrieller Prozess zur Gewinnung von Cellulose aus Holz. Beim Sulfitverfahren kann, je nach verwendetem Kation (Calcium, Magnesium, Natrium, Ammonium), das Holz im sauren oder auch neutralen Milieu aufgeschlossen werden (Holzaufschluss). Im Prozess wird das Lignin unter Molekülverkleinerung einer Sulfonierung unterworfen und wird dabei in ein wasserlösliches Salz der Ligninsulfonsäure überführt, welches leicht aus der Faser entfernt werden kann. Wasserlösliche Salze der Ligninsulfonsäure werden als Ligninsulfonat bezeichnet. Je nach pH-Wert werden die im Holz vorhandenen Hemicellulosen entweder durch saure Hydrolyse in Zucker umgewandelt und gehen in die wässrige Phase über oder sie verbleiben mit der Cellulose in der Faser. Die so hergestellten Zellstoffe werden zur Papierherstellung verwendet. Rund 15 % des in Deutschland verbrauchten Zellstoffs werden im Sulfitverfahren gewonnen. Ligninsulfonat fällt in großen Mengen als Nebenprodukt an, welches bei fehlender Verwendungsmöglichkeit verbrannt werden muss.

Chemisch gesehen ist Ligninsulfonat ein wasserlösliches Polyphenol. Ligninsulfonat kann als Salz in Form von Calcium-, Magnesium-, Ammonium- und/oder NatriumLigninsulfonat vorliegen. Ligninsulfonate haben eine sehr breite Molmassenverteilung von 1000 bis 140000 g/mol. Die mittlere molare Masse des Ligninsulfonats ist abhängig von dem zur Herstellung eingesetzten Holz (Nadelholz, Laubholz) und vom Herstellungsprozess selbst. Die Ligninsulfonate sind leicht löslich in Wasser. Auch mit hohem Molekulargewicht sind sie wasserlöslich.

Lignin wird im Sulfitverfahren durch Sulfonierung in wasserlösliches Ligninsulfonat überführt. Über die zahlreichen noch vorhandenen freien OH-Gruppen kann es mit Polyisocyanat reagieren und dieses über die ebenfalls vorhandenen Sulfonatgruppen in Bezug auf wässrige oder polare Phasen kompatibilisieren. Dies erklärt vermutlich die hervorragenden emulgierenden Eigenschaften von Ligninsulfonat auf Polyisocyanate wie PMDI. Diese werden besonders in Kombination mit den erfindungsgemäß eingesetzten isocyanatreaktiven Verbindungen deutlich.

Der pH-Wert des eingesetzten Ligninsulfonats kann in weiten Bereichen variieren, je nach Art des Sulfitverfahrens, aus dem es stammt. So ist ein pH-Wert von 1 bis 13 möglich. Die Bindemittelzusammensetzung kann einen pH-Wert von 4 bis 8, bevorzugt von 5 bis 7 aufweisen.

In einer Ausführungsform handelt es sich bei dem Ligninsulfonat um Calcium-Ligninsulfonat. In einer anderen Ausführungsform handelt es sich bei dem Ligninsulfonat um Magnesium-Ligninsulfonat. In einer weiteren Ausführungsform handelt es sich bei dem Ligninsulfonat um Ammonium-Ligninsulfonat. Es können auch Mischungen dieser drei Ligninsulfonat-Typen eingesetzt werden.

Die erste und die zweite Bindemittelzusammensetzung unterscheiden sich in ihrer Zusammensetzung, insbesondere hinsichtlich des Vorhandenseins oder der Menge an Ligninsulfonat. Die zweite Bindemittelzusammensetzung enthält typischerweise mehr Ligninsulfonat als die erste Bindemittelzusammensetzung. Letztere ist vorzugsweise sogar im Wesentlichen frei von Ligninsulfonat. Die erste und die zweite Bindemittelzusammensetzung können vom Typ her jedoch ähnlich sein. In einer Ausführungsform sind die erste und die zweite Bindemittelzusammensetzung beide formaldehydfrei. In einer weiteren Ausführungsform sind die erste und die zweite Bindemittelzusammensetzung polyisocyanatbasierte Bindemittelzusammensetzungen.

Wenn hier von "polyisocyanatbasierter" Bindemittelzusammensetzung die Rede ist, bedeutet dies, dass der Bindemittelbestandteil Polyisocyanat den größten Fetstoffanteil der Bindemittelzusammensetzung ausmacht. Dabei können die Gew.-%-Angaben für das Polyisocyanatgewicht (Feststoff) in der zweiten Bindemittelzusammensetzung bezogen sein auf das Gesamtfeststoffgewicht der jeweiligen Bindemittelzusammensetzung oder auf das Trockengewicht des jeweiligen lignocellulosehaltigen Materials.

Die zweite Bindemittelzusammensetzung unterscheidet sich von der ersten Bindemittelzusammensetzung vorzugsweise dadurch, dass die zweite Bindemittelzusammensetzung Ligninsulfonat enthält und die erste im Wesentlichen frei von Ligninsulfonat ist. Bevorzugt ist die erste Bindemittelzusammensetzung frei von Ligninsulfonat. Dies ist besonders vorteilhaft, weil durch die unterschiedliche Verklebung der verschiedenen Schichten des erfindungsgemäßen Holzwerkstoffs, die plattenrelevanten Kenngrößen wie Querzugfestig, Biegefestigkeit, Wasseraufnahme und Quellung unabhängig voneinander optimiert, eingestellt und angepasst werden können. Außerdem bedeutet die Teilsubstitution von Polyisocyanat durch Ligninsulfonat in den Deckschichten eine Kostenersparnis, die so wenig wie möglich zu Lasten der mechanischen Eigenschaften geht und diese im Gegenteil sogar noch überraschenderweise verbessert. In einer weiteren Ausführungsform unterscheiden sich die erste und die zweite Bindemittelzusammensetzung in weiteren darin enthaltenen Bindemittelbestandteilen. Beispielsweise können Hydrophobiermittel, Feuerschutzmittel, Pilzschutzmittel, Streckmittel oder sonstige andere Bestandteile der ersten und/oder der zweiten Bindemittelzusammensetzung in unterschiedlicher Art und Weise oder überhaupt zugesetzt werden. Dadurch können die Eigenschaften des Holzwerkstoffs in unterschiedlichem Maß beeinflusst werden. Beinflussbare Eigenschaften sind dabei beispielsweise die Querzugfestig, Biegefestigkeit, Wasseraufnahme und Quellung.

Des Weiteren ist es möglich, dass die erste und/oder zweite

Bindemittelzusammensetzung Formaldehydfänger enthält. Ein Formaldehydfänger bindet freies bzw. ungebundenes Formaldehyd chemisch ab. Solche als "Formaldehydfänger" bezeichneten Stoffe sind Substanzen mit freien Aminogruppen, wie beispielsweise Melamin oder Harnstoff. Der Formaldehydfänger kann jedoch auch aus zwei oder mehreren Bestandteilen bestehen, die gemeinsam die Bindung des Formaldehyds bewirken.

### Verfahren

Die Erfindung stellt ein Verfahren zur Herstellung eines Holzwerkstoffs bereit, wobei der Holzwerkstoff eine Mittelschicht und zwei Deckschichten enthält . Das erfindungsgemäße Verfahren ist im Anspruch 9 definiert und umfasst die folgenden Schritte:
a) Bereitstellen von lignocellulosehaltigem Material für die Mittelschicht und die Deckschichten;
b) Beleimen des lignocellulosehaltigen Materials für die Mittelschicht mit einer ersten Bindemittelzusammensetzung und Beleimen des lignocellulosehaltigen Materials für mindestens eine Deckschicht mit einer zweiten Bindemittelzusammensetzung, wobei die erste und zweite Bindemittelzusammensetzung unterschiedlich sind;
c) Streuen des beleimten lignocellulosehaltigen Materials der Mittelschicht und der Deckschichten, sodass das beleimte lignocellulosehaltige Material für die Mittelschicht sandwichartig eingebettet ist zwischen dem beleimten lignocellulosehaltigen Material für die Deckschichten;
d) Verpressen des ausgestreuten lignocellulosehaltigen Materials zu einem Holzwerkstoff;
   wobei
   die zweite Bindemittelzusammensetzung eine polyisocyanatbasierte Bindemittelzusammensetzung ist, die Ligninsulfonat enthält und die erste Bindemittelzusammensetzung frei von Ligninsulfonat ist.

Im Hinblick auf das erfindungsgemäßen Verfahren gilt das im Zusammenhang mit der ersten und zweiten Bindemittelzusammensetzung bereits zuvor Gesagte entsprechend. Das Verfahren wird typischerweise in alphabetischer Reihenfolge der obengenannten Schritte durchgeführt. Es können jedoch vor, gleichzeitig und danach sowie zwischen den genannten Schritten noch weitere Verfahrensschritte durchgeführt werden. Schritt a) des erfindungsgemäßen Verfahrens besteht in der Bereitstellung von lignocellulosehaltigen Material. In einem optionalen Schritt kann das lignocellulosehaltige Material vor oder nach dem Einsatz in Schritt a) des erfindungsgemäßen Verfahrens getrocknet oder zwischengelagert werden.

Schritt b) des erfindungsgemäßen Verfahrens besteht in dem Aufbringen einer ersten Bindemittelzusammensetzung auf lignocellulosehaltiges Material für die Mittelschicht und einer zweiten Bindemittelzusammensetzung auf lignocellulosehaltiges Material für mindestens eine Deckschicht. Die erste und/oder die zweite Bindemittelzusammensetzung kann in Form einer vorgemischten Bindemittelzusammensetzung vorliegen oder erst nach Einzelapplikation der Bestandteile der jeweiligen Bindemittelzusammensetzung in situ auf dem lignocellulosehaltigen Material entstehen. Demnach können das Polyisocyanat und das Ligninsulfonat der zweiten Bindemittelzusammensetzung auch separat voneinander auf das lignocellulosehaltige Material aufgebracht werden. Das Aufbringen der getrennten Bestandteile kann simultan oder sequenziell erfolgen. Die erste und/oder die zweite Bindemittelzusammensetzung kann also in Schritt b) als bereits hergestelltes Gemisch oder getrennt in Form ihrer Bindemittelbestandteile auf das lignocellulosehaltige Material aufgebracht werden und sich dort *in situ* bilden.

Das Aufbringen erfolgt durch Inkontaktbringen des lignocellulosehaltigen Materials für die Mittelschicht mit der ersten Bindemittelzusammensetzung und des lignocellulosehaltigen Materials für mindestens eine Deckschicht mit der zweiten Bindemittelzusammensetzung bzw. deren Bestandteilen wie es dem Fachmann von der Beleimung von Holzpartikeln und der Herstellung mehrschichtiger Holzwerkstoffe allgemein bekannt ist. Das Aufbringen kann insbesondere durch Tränken oder Aufsprühen, z.B. in einer Blowline, erfolgen. Das Aufbringen kann alternativ oder zusätzlich in einer Beleimtrommel erfolgen. Insbesondere kann das Aufbringen durch Düsen, beispielsweise mittels einer Zweistoffdüse, erfolgen.

Die Menge der in Schritt b) auf das lignocellulosehaltige Material aufgebrachten zweiten Bindemittelzusammensetzung beträgt vorzugsweise 1 bis 16 Gew.-%, insbesondere 1,5 bis 14 Gew.-%, noch bevorzugter 2,5 bis 12 Gew.-%, bezogen auf das Trockengewicht des lignocellulosehaltigen Materials (Festharz/atro) der jeweiligen Schicht. Wenn die erste Bindemittelzusammensetzung ebenfalls polyisocyanatbasiert ist, dann beträgt die in Schritt b) aufgebrachten Menge der ersten Bindemittelzusammensetzung ebenfalls 1 bis 16 Gew.-%, insbesondere 1,5 bis 14 Gew.- %, noch bevorzugter 2,5 bis 12 Gew.-%, bezogen auf das Trockengewicht des lignocellulosehaltigen Materials (Festharz/atro) der Mittelschicht. Wenn die erste Bindemittelzusammensetzung aminoplastbasiert ist, beträgt die Menge der in Schritt b) aufgebrachten ersten Bindemittelzusammensetzung, bezogen auf das Trockengewicht des lignocellulosehaltigen Materials (Festharz/atro) der Mittelschicht, vorzugsweise 1 bis 25 Gew.-%, insbesondere 3 bis 20 Gew.-% und noch bevorzugter 4 bis 17 Gew.-%.

"Trockengewicht" oder "atro Holz", wie hierin verwendet, bezieht sich auf das Gewicht von darrtrockenem lignocellulosehaltigem Material, welches praktisch wasserfrei ist. Der darrtrockene Zustand des lignocellulosehaltigen Materials kann beispielsweise durch Lagerung bei einer Temperatur von 103 °C +/- 2 °C bis zur Gewichtskonstanz erzielt werden. Das "Trockengewicht" oder "atro Holz" eines Holzwerkstoffs wird bestimmt, indem zunächst der Feuchtegehalt von Prüfkörpern aus dem Holzwerkstoff nach DIN EN 322 ermittelt wird und dieses Ergebnis anschließend verwendet wird, um den Feuchtegehalt zur Bestimmung des Trockengewichts herauszurechnen.

In Schritt c) wird das beleimte lignocellulosehaltige Material der Mittelschicht und der Deckschichten ausgestreut, sodass das beleimte lignocellulosehaltige Material für die Mittelschicht sandwichartig eingebettet ist zwischen dem beleimten lignocellulosehaltigen Material für die Deckschichten. Dies ist dem Fachmann aus der Herstellung gattungsgemäßer mehrschichtiger Holzwerkstoffe bekannt. Die Streuung des beleimten lignocellulosehaltigen Materials für die unterschiedlichen Schichten erfolgt also schichtweise übereinander. Über das beleimte lignocellulosehaltige Material für die erste Deckschicht wird das beleimte lignocellulosehaltige Material der Mittelschicht gestreut und darüber wiederum das lignocellulosehaltige Material für die zweite Deckschicht. In einer weiteren Ausführungsform können vor, während und/oder nach Schritt c) noch weitere Schichten aufgebracht werden. Beispielsweise kann in Schritt c) eine weitere Mittelschicht ausgestreut werden. Die weiteren Schichten können jedoch auch aus nicht-lignocellulosehaltigem Material gebildet werden bzw. solches enthalten. Beispielsweise kann eine Schicht aus Füllmaterial wie beispielsweise Polymerkügelchen oder anorganische Partikel aufgebracht werden. In einer weiteren Ausführungsform kann das ausgestreute lignocellulosehaltige Material der verschiedenen Schichten eine unterschiedliche Orientierung aufweisen. Beispielsweise können Holzspäne oder -strands längs und quer orientiert so gestreut werden, dass diese kreuzweise zueinander in den übereinanderliegenden Schichten angeordnet sind. Eine solche unterschiedliche Ausrichtung des eingesetzten lignocellulosehaltigen Materials wird bei der Ausstreuung in Schritt b) insbesondere bei der Herstellung von OSB-Platten eingesetzt.

In Schritt d) des erfindungsgemäßen Verfahrens werden die beleimten Schichten aus lignocellulosehaltige Material zu einem Holzwerkstoff verpresst. Die Verpressung erfolgt nach Verfahren zur Herstellung von Holzwerkstoffen, die dem Fachmann wohlbekannt sind. Grundsätzlich sind dem Fachmann verschiedene Methoden bekannt, um Holzwerkstoffe durch Verpressen herzustellen. Das Verpressen findet üblicherweise unter erhöhter Temperatur, insbesondere bei 100 °C bis 250 °C statt. Vorzugsweise handelt es sich bei Schritt d) um eine Heißverpressung. Optimale Ergebnisse können erzielt werden, wenn der Pressfaktor beim Pressen von 2 bis 10 s/mm, bevorzugt von 3 bis 6 s/mm, beträgt. Unter Pressfaktor wird hier insbesondere die Verweilzeit des lignocellulosehaltigen Holzwerkstoffs in Sekunden je Millimeter Dicke oder Stärke des fertigen gepressten lignocellulosehaltigen Holzwerkstoffs in der Presse verstanden.

Geeignete Temperaturen für das Verpressen in Schritt d) des erfindungsgemäßen Verfahrens oder einer seiner Ausführungsformen sind Temperaturen von 100 °C bis 250 °C, insbesondere 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden.

Aus ökonomischen und verfahrenstechnischen Gründen hat es sich als vorteilhaft erwiesen, wenn beim Verpressen ein spezifischer Pressdruck (aktiver Druck auf der Plattenoberfläche) von 50 bis 300 N/cm², verwendet wird. Derartige Drücke stellen eine besonders gute Verklebung des lignocellulosehaltigen Materials sicher. Zudem kann mit einem solchen Pressdruck eine hohe Festigkeit der Holzwerkstoffe erreicht werden.

In einer Ausführungsform beträgt das Gewichtsverhältnis der Schichten (bezogen auf das Gesamtgewicht der jeweiligen Schicht) bei einem dreischichtigen Aufbau (Deckschicht:Mittelschicht:Deckschicht) des Holzwerkstoffs von 10:80:10 bis 30:40:30 oder bevorzugt von 15:70:15 bis 30:40:30. Besonders praxisgerechte Ergebnisse stellen sich bei einem Schichtverhältnis von ca. 20 : 60 : 20 und besonders bevorzugt ca. 25 : 50 : 25 ein.

Praktische Versuche haben gezeigt, dass sich das erfindungsgemäße Verfahren sowie die beschriebenen Ausführungsformen besonders gut zur Herstellung von gepressten Holzspanwerkstoffen, insbesondere zur Herstellung von Span- und OSB-Platten eignen.

### Verwendung

Die erfindungsgemäße Verwendung einer polyisocyanatbasierten Bindemittelzusammensetzung enthaltend Ligninsulfonat in mindestens einer Deckschicht eines mehrschichtigen Holzwerkstoffs , wobei der Kern des mehrschichtigen Holzwerkstoffs frei von Ligninsulfonat ist, eignet sich hervorragend dazu, einen kostengünstigen Holzwerkstoff mit guten mechanischen Eigenschaften herzustellen. Erfindungsgemäß wurde gefunden, dass die Verwendung von Ligninsulfonat in einer Deckschicht eines mehrschichtigen Holzwerkstoffs vorteilhaft ist, da so die mechanischen Eigenschaften des mehrschichtigen Holzwerkstoffs verbessert werden können, insbesondere die Querzugfestigkeit.

Dem Fachmann sind grundsätzlich verschiedene Verfahren bekannt um die mechanischen Eigenschaften eines Holzwerkstoffs zu untersuchen. Beispielsweise kann die Querzugfestigkeit nach EN 319 und die Biegefestigkeit nach EN 310 ermittelt werden.

Praktische Versuche haben gezeigt, dass durch den (ausschließlichen) Einsatz von Ligninsulfonat in den Deckschichten eines mehrschichtigen Holzwerkstoffs, die mechanische Festigkeit des Holzwerkstoffs, insbesondere die Querzugfestigkeit, verbessert werden kann, ohne dass es gleichzeitig zu einer erheblichen Verschlechterung der Quellung und Wasseraufnahme des Holzwerkstoffs kommt.

### BEISPIELE

Das folgende Ausführungsbeispiel dient der näheren Erläuterung der Erfindung, insbesondere in Bezug auf bestimmte Ausführungsformen der Erfindung. Die Ausführungsbeispiele sollen die vorliegende Offenbarung jedoch nicht einschränken.

Die folgenden Abkürzungen werden verwendet:
- atro: absolut trocken, wobei zunächst der Feuchtegehalt des Holzwerkstoffs nach DIN EN 322 bestimmt wird und dieses Ergebnis anschließend verwendet wird, um den Feuchtegehalt herauszurechnen.
- DS: Deckschicht
- LS: Magnesium-Ligninsulfonat, Collex 55 G, Sappi Biotech GmbH
- MS: Mittelschicht
- OSB: Oriented strand board
- PMDI: Polymeres Diphenylmethandiisocyanat, Ongronat^{®} WO 2750, BorsodChem Chemistry for generations
- REF: Referenzplatte

Es wurden 16 mm dicke OSB Platten hergestellt. Die OSB Platten wurden mit einer Zieldichte von 650 kg/m³ produziert, wobei Strands mit einer Feuchte von 6,8 % eingesetzt wurden. Die hergestellten Platten wiesen einen dreischichtigen Aufbau auf, wobei das Verhältnis von Deckschicht (DS)/Mittelschicht (MS)/Deckschicht 20:60:20 Gew.-% bezogen auf das Gesamtgewicht der Platte betrug.

Bei der Herstellung der OSB Versuchsplatte wurde im Vergleich zur Referenzpatte das Bindemittel PMDI in den Deckschichten zu 20% mit Lignin S (LS) ersetzt.

Die Pressung der Platten wurde bei einem Pressdruck von maximal 150 bar und einem Pressfaktor von 8,1 Sekunden/mm durchgeführt, was zu einer Pressdauer von 129,6 Sekunden führte. Der spezifische Pressdruck betrug 583 N/m². Die Presstemperatur betrug 220 °C.

Die hergestellten OSB Platten wurden bezüglich der plattenrelevanten Kenngrößen Querzugfestigkeit, Biegefestigkeit, Quellung und Wasseraufnahme untersucht. Die Querzugfestigkeit wurde mittels der EN 319 an der Zwick-Roell Zmart.Pro ermittelt. Die Biegefestigkeit wurde mittels der EN 310 ermittelt. Die Quellung wurde nach EN 317 gemessen. Die Wasseraufnahme wurde nach Verbleib der Platten für 24 Stunden im Quellbecken untersucht.

In Tabelle 1 sind die Versuchsparameter bezüglich der Bindemittelzusammensetzung in der Mittel- und Deckschicht für die hergestellten OSB Platten zusammengefasst.

**Tabelle 1: Versuchsparameter bezüglich der Bindemittelzusammensetzung**

| | Mittelschicht [% (fest/atro)] | | | Deckschicht [% (fest/atro)] | | |
|---|---|---|---|---|---|---|
| Platten-Nummer | PMDI | LS | Soll-Feuchte | PMDI | LS | Soll-Feuchte |
| REF | 4 | - | 6,5 | 4 | - | 14 |
| 1 | 4 | - | 6,5 | 3,2 | 0,8 | 14 |

Die plattenrelevanten Kenngrößen wurden jeweils an 10 Einzelprüflingen untersucht, die aus der Ursprungsplatte generiert wurden. Die Biegefestigkeit wurde nur an 8 Einzelprüflingen untersucht. Insgesamt liegen daher für jede hergestellte OSB Platte 10 bzw. 8 Einzelmessergebnisse pro plattenrelevanter Kenngröße vor.

In Tabelle 2 sind die Mittelwerte der Messergebnisse für die Querzugfestigkeit und Biegefestigkeit der hergestellten OSB Platten zusammengefasst.

**Tabelle 2: Mittelwerte der Messergebnisse für Querzug und Biegefestigkeit**

| | Querzug | | | Biegefestigkeit | | | |
|---|---|---|---|---|---|---|---|
| Platten-Nummer | Dicke [mm] | Dichte [kg/m3] | Querzug [N/mm²] | Dicke [mm] | Dichte [kg/m3] | Biegung [N/mm²] | e-Modul [N/mm²] |
| REF | 16,10 | 608,18 | 0,82 | 15,51 | 648,82 | 26,96 | 4143,50 |
| 1 | 15,46 | 663,87 | 0,93 | 15,52 | 649,20 | 29,41 | 4476,25 |

Wie aus Tabelle 2 ersichtlich, wird die Querzugfestigkeit der OSB Platten durch die Substitution des PMDI mit LS in den Deckschichten verbessert. Auch hinsichtlich der Biegsamkeit der OSB Platten zeigt Tabelle 2, dass sich die Substitution von PMDI mit LS in den Deckschichten vorteilhaft auf die Biegefestigkeit auswirkt.

In Tabelle 3 sind die Mittelwerte der Messergebnisse für die Quellung und Wasseraufnahme der hergestellten OSB Platten zusammengefasst.

**Tabelle 3: Mittelwerte der Messergebnisse für Quellung und Wasseraufnahme**

| | Wasseraufnahme | | | |
|---|---|---|---|---|
| Platten-Nummer | Dicke [mm] | Dichte [kg/m³] | Quellung % | Wasseraufnahme % |
| REF | 16,12 | 614,29 | 24,32 | 86,93 |
| 1 | 15,38 | 643,43 | 26,95 | 84,56 |

Wie aus Tabelle 3 ersichtlich, wirkt sich die Substitution von PMDI mit LS in den Deckschichten des Holzwerkstoffs nicht in erheblichen Maß nachteilig auf die Quellung und Wasseraufnahme des Holzwerkstoffs aus.

## Patentansprüche

1. Holzwerkstoff, umfassend eine Mittelschicht und zwei Deckschichten, enthaltend
- in der Mittelschicht: lignocellulosehaltiges Material verklebt durch eine erste Bindemittelzusammensetzung;
- in mindestens einer Deckschicht: lignocellulosehaltiges Material verklebt durch eine zweite Bindemittelzusammensetzung;
**dadurch gekennzeichnet, dass**
- die erste und zweite Bindemittelzusammensetzung unterschiedlich sind;
- die zweite Bindemittelzusammensetzung eine polyisocyanatbasierte Bindemittelzusammensetzung ist, die Ligninsulfonat enthält; und
- die erste Bindemittelzusammensetzung frei von Ligninsulfonat ist .

2. Holzwerkstoff nach Anspruch 1, **dadurch gekennzeichnet, dass** das Polyisocyanat ein aromatisches Polyisocyanat ist, insbesondere ausgewählt aus der Gruppe bestehend aus Diphenylmethandiisocyanat (MDI) und polymeren Diphenylmethandiisocyanat (PMDI).

3. Holzwerkstoff nach Anspruch 1 oder 2, **dadurch gekennzeichnet, dass** die zweite Bindemittelzusammensetzung
- Polyisocyanat in einer Menge von 30 bis 95 Gew.-%, bevorzugt von 40 bis 85 Gew.-% und insbesondere bevorzugt von 50 bis 75 Gew.-% und Ligninsulfonat in einer Menge von 1 bis 50 Gew.-%, bevorzugt von 1 bis 40 Gew.-% und insbesondere bevorzugt von 1 bis 35 Gew.-% bezogen auf das Gesamtfeststoffgewicht der Bindemittelzusammensetzung; oder
- Polyisocyanat in einer Menge von 1 bis 10 Gew.-%, bevorzugt von 1,5 bis 8 Gew.% und noch bevorzugter von 2,5 bis 6 Gew.-% und Ligninsulfonat in einer Menge von 0,05 bis 3 Gew.-%, bevorzugt von 0,05 bis 2,5 Gew.-% und insbesondere bevorzugt von 0,05 bis 2 Gew.-% bezogen auf das Trockengewicht des lignocellulosehaltigen Materials für die mindestens eine Deckschicht;
enthält, wobei Gesamtfeststoffgewicht der Bindemittelzusammensetzung bedeutet das Gesamtfeststoffgewicht der in der Bindemittelzusammensetzung enthaltenen Bestandteile.

4. Holzwerkstoff nach einem der vorstehenden Ansprüche, **dadurch gekennzeichnet, dass** die erste Bindemittelzusammensetzung eine polyisocyanatbasierte oder aminoplastbasierte Bindemittelzusammensetzung oder ein Mischsystem daraus ist.

5. Holzwerkstoff nach einem der vorstehenden Ansprüche, **dadurch gekennzeichnet, dass** das lignocellulosehaltige Material Holz enthält oder aus Holz besteht.

6. Holzwerkstoff nach einem der vorstehenden Ansprüche, **dadurch gekennzeichnet, dass** das lignocellulosehaltige Material ausgewählt ist aus der Gruppe bestehend aus Holzmehl, Holzfasern, Holzspänen, Holzstrands und Hackschnitzeln.

7. Holzwerkstoff nach einem der vorstehenden Ansprüche, **dadurch gekennzeichnet, dass** die mindestens eine Deckschicht des Holzwerkstoffs 1 bis 40 Gew.-% des Gesamtgewichts des Holzwerkstoffs ausmacht.

8. Holzwerkstoff nach einem der vorstehenden Ansprüche, **dadurch gekennzeichnet, dass** der Holzwerkstoff ausgewählt ist aus der Gruppe bestehend aus einer Spanplatte, OSB-Platte, Faserplatte und einem furnierbasiertem Holzwerkstoff.

9. Verfahren zur Herstellung eines Holzwerkstoffs, enthaltend eine Mittelschicht und zwei Deckschichten, wobei das Verfahren folgende Schritte umfasst:
a) Bereitstellen von lignocellulosehaltigem Material für die Mittelschicht und die Deckschichten;
b) Beleimen des lignocellulosehaltigen Materials für die Mittelschicht mit einer ersten Bindemittelzusammensetzung und Beleimen des lignocellulosehaltigen Materials für mindestens eine Deckschicht mit einer zweiten Bindemittelzusammensetzung, wobei die erste und zweite Bindemittelzusammensetzung unterschiedlich sind;
c) Streuen des beleimten lignocellulosehaltigen Materials der Mittelschicht und der Deckschichten, sodass das beleimte lignocellulosehaltige Material für die Mittelschicht sandwichartig eingebettet ist zwischen dem beleimten lignocellulosehaltigen Material für die Deckschichten;
d) Verpressen des ausgestreuten lignocellulosehaltigen Materials zu einem Holzwerkstoff;
**dadurch gekennzeichnet, dass** die zweite Bindemittelzusammensetzung eine polyisocyanatbasierte Bindemittelzusammensetzung ist, die Ligninsulfonat enthält und die erste Bindemittelzusammensetzung frei von Ligninsulfonat ist.

10. Verfahren nach Anspruch 9, **dadurch gekennzeichnet, dass**
- die zweite Bindemittelzusammensetzung wie in einem der Ansprüche 2 oder 3 definiert ist; und/oder
- die erste Bindemittelzusammensetzung definiert ist wie in Anspruch 4; und/oder
- das lignocellulosehaltige Material definiert ist wie in einem der Ansprüche 5 oder 6; und/oder
- der Holzwerkstoff definiert ist wie in einem der Ansprüche 7 oder 8.

11. Verfahren nach Anspruch 9 oder 10, **dadurch gekennzeichnet, dass** die zweite Bindemittelzusammensetzung in Schritt b) als Gemisch oder getrennt in Form ihrer Bindemittelbestandteile auf das lignocellulosehaltige Material aufgebracht wird.

12. Verwendung einer polyisocyanatbasierten Bindemittelzusammensetzung enthaltend Ligninsulfonat in mindestens einer Deckschicht eines mehrschichtigen Holzwerkstoffs, wobei der Kern des mehrschichtigen Holzwerkstoffs frei von Ligninsulfonat ist.

13. Verwendung von Ligninsulfonat in einer Deckschicht eines mehrschichtigen Holzwerkstoffs zur Verbesserung der Querzugfestigkeit des Holzwerkstoffs, wobei der Kern des mehrschichtigen Holzwerkstoffs frei von Ligninsulfonat ist.

## Claims

1. Wood-based material comprising a middle layer and two outer layers containing
- in the middle layer: lignocellulose-containing material bonded by a first binder composition;
- in at least one outer layer: lignocellulose-containing material bonded by a second binder composition;
**characterized in that**
- the first and second binder compositions are different;
- the second binder composition is a polyisocyanate-based binder composition containing lignin sulfonate; and
- the first binder composition is free of lignin sulfonate.

2. Wood-based material according to claim 1, **characterized in that** the polyisocyanate is an aromatic polyisocyanate, in particular selected from the group consisting of diphenylmethane diisocyanate (MDI) and polymeric diphenylmethane diisocyanate (PMDI).

3. Wood-based material according to either claim 1 or claim 2, **characterized in that** the second binder composition contains
- polyisocyanate in an amount of from 30 to 95 wt.%, preferably from 40 to 85 wt.% and particularly preferably from 50 to 75 wt.% and lignin sulfonate in an amount of from 1 to 50 wt.%, preferably from 1 to 40 wt.% and particularly preferably from 1 to 35 wt.%, based on the total solids weight of the binder composition; or
- polyisocyanate in an amount of from 1 to 10 wt.%, preferably from 1.5 to 8 wt.% and even more preferably from 2.5 to 6 wt.% and lignin sulfonate in an amount of from 0.05 to 3 wt.%, preferably from 0.05 to 2.5 wt.% and particularly preferably from 0.05 to 2 wt.%, based on the dry weight of the lignocellulose-containing material for the at least one outer layer;
wherein "total solids weight of the binder composition" refers to the total solids weight of the constituents contained in the binder composition.

4. Wood-based material according to any of the preceding claims, **characterized in that** the first binder composition is a polyisocyanate-based or aminoplast-based binder composition or a mixed system thereof.

5. Wood-based material according to any of the preceding claims, **characterized in that** the lignocellulose-containing material contains wood or consists of wood.

6. Wood-based material according to any of the preceding claims, **characterized in that** the lignocellulose-containing material is selected from the group consisting of wood dust, wood fibers, wood shavings, wood strands and wood chips.

7. Wood-based material according to any of the preceding claims, **characterized in that** the at least one cover layer of the wood-based material makes up 1 to 40 wt.% of the total weight of the wood-based material.

8. Wood-based material according to any of the preceding claims, **characterized in that** the wood-based material is selected from the group consisting of a chipboard, OSB board, fiber board and a veneer-based wood-based material.

9. Method for producing a wood-based material, comprising a middle layer and two outer layers, the method comprising the following steps:
a) providing lignocellulose-containing material for the middle layer and the outer layers;
b) coating the lignocellulose-containing material for the middle layer with a first binder composition and coating the lignocellulose-containing material for at least one outer layer with a second binder composition, wherein the first and second binder compositions are different;
c) spreading the coated lignocellulose-containing material of the middle layer and the outer layers, so that the coated lignocellulose-containing material for the middle layer is sandwiched between the coated lignocellulose-containing material for the outer layers;
d) pressing the spread lignocellulose-containing material to form a wood-based material;
**characterized in that** the second binder composition is a polyisocyanate-based binder composition containing lignin sulfonate and the first binder composition is free of lignin sulfonate.

10. Method according to claim 9, **characterized in that**
- the second binder composition is as defined in either claim 2 or claim 3; and/or
- the first binder composition is defined as in claim 4; and/or
- the lignocellulose-containing material is defined as in either claim 5 or claim 6; and/or
- the wood-based material is defined as in either claim 7 or claim 8.

11. Method according to either claim 9 or claim 10, **characterized in that** the second binder composition is applied to the lignocellulose-containing material in step b) as a mixture or separately in the form of its binder constituents.

12. Use of a polyisocyanate-based binder composition containing lignin sulfonate in at least one outer layer of a multilayer wood-based material, wherein the core of the multilayered wood-based material is free from lignin sulfonate.

13. Use of lignin sulfonate in an outer layer of a multilayered wood-based material to improve the transverse tensile strength of the wood-based material, wherein the core of the multilayered wood-based material is free from lignin sulfonate.

## Revendications

1. Matériau dérivé du bois comprenant une couche intermédiaire et deux couches externes, contenant
- dans la couche intermédiaire : un matériau lignocellulosique collé par une première composition de liant;
- dans au moins une couche externe : un matériau lignocellulosique collé par une seconde composition de liant ;
**caractérisé en ce que**
- les première et seconde compositions de liant sont différentes ;
- la seconde composition de liant est une composition de liant à base de polyisocyanate contenant du sulfonate de lignine ; et
- la première composition de liant est exempte de sulfonate de lignine.

2. Matériau dérivé du bois selon la revendication 1, **caractérisé en ce que** le polyisocyanate est un polyisocyanate aromatique, en particulier choisi dans le groupe constitué par le diphénylméthane diisocyanate (MDI) et le diphénylméthane diisocyanate polymérique (PMDI).

3. Matériau dérivé du bois selon la revendication 1 ou 2, **caractérisé en ce que** la seconde composition de liant contient
- du polyisocyanate en une quantité de 30 à 95 % en poids, de préférence de 40 à 85 % en poids et de manière particulièrement préférée de 50 à 75 % en poids, et du sulfonate de lignine en une quantité de 1 à 50 % en poids, de préférence de 1 à 40 % en poids et de manière particulièrement préférée de 1 à 35 % en poids, par rapport au poids total de solides de la composition de liant ; ou
- du polyisocyanate en une quantité de 1 à 10 % en poids, de préférence de 1,5 à 8 % en poids et encore plus préférablement de 2,5 à 6 % en poids et du sulfonate de lignine en une quantité de 0,05 à 3 % en poids, de préférence de 0,05 à 2,5 % en poids et de manière particulièrement préférée de 0,05 à 2 % en poids, par rapport au poids sec du matériau lignocellulosique pour l'au moins une couche externe ;
le poids total de solides de la composition de liant représentant le poids total de solides des constituants contenus dans la composition de liant.

4. Matériau dérivé du bois selon l'une des revendications précédentes, **caractérisé en ce que** la première composition de liant est une composition de liant à base de polyisocyanate ou d'aminoplaste ou un système mixte de celles-ci.

5. Matériau dérivé du bois selon l'une des revendications précédentes, **caractérisé en ce que** le matériau lignocellulosique contient du bois ou est constitué de bois.

6. Matériau dérivé du bois selon l'une des revendications précédentes, **caractérisé en ce que** le matériau lignocellulosique est choisi dans le groupe constitué par la poudre de bois, les fibres de bois, les copeaux de bois, les débris de bois et le bois déchiqueté.

7. Matériau dérivé du bois selon l'une des revendications précédentes, **caractérisé en ce que** l'au moins une couche externe du matériau dérivé du bois représente 1 à 40 % en poids du poids total du matériau dérivé du bois.

8. Matériau dérivé du bois selon l'une des revendications précédentes, **caractérisé en ce que** le matériau dérivé du bois est choisi dans le groupe constitué par un panneau de particules, un panneau OSB, un panneau de fibres et un matériau dérivé du bois à base de placage.

9. Procédé de fabrication d'un matériau dérivé du bois, contenant une couche intermédiaire et deux couches externes, le procédé comprenant les étapes suivantes :
a) fourniture de matériau lignocellulosique pour la couche intermédiaire et les couches externes ;
b) enduisage du matériau lignocellulosique pour la couche intermédiaire avec une première composition de liant et enduisage du matériau lignocellulosique pour au moins une couche externe avec une seconde composition de liant, les première et seconde compositions de liant étant différentes ;
c) dispersion du matériau lignocellulosique enduit de la couche intermédiaire et des couches externes, de sorte que le matériau lignocellulosique enduit pour la couche intermédiaire est incorporé en sandwich entre le matériau lignocellulosique enduit pour les couches externes ;
d) pressage du matériau lignocellulosique dispersé afin de former un matériau dérivé du bois ;
**caractérisé en ce que** la seconde composition de liant est une composition de liant à base de polyisocyanate contenant du sulfonate de lignine et la première composition de liant est exempte de sulfonate de lignine.

10. Procédé selon la revendication 9, **caractérisé en ce que**
- la seconde composition de liant est définie telle que dans l'une des revendications 2 ou 3 ; et/ou
- la première composition de liant est définie telle que dans la revendication 4 ; et/ou
- le matériau lignocellulosique est défini tel que dans l'une des revendications 5 ou 6 ; et/ou
- le matériau dérivé du bois est défini tel que dans l'une des revendications 7 ou 8.

11. Procédé selon la revendication 9 ou 10, **caractérisé en ce que** la seconde composition de liant est appliquée sur le matériau lignocellulosique à l'étape b) en mélange ou séparément sous forme de ses constituants de liant.

12. Utilisation d'une composition de liant à base de polyisocyanate contenant du sulfonate de lignine dans au moins une couche externe d'un matériau dérivé du bois multicouche, le noyau du matériau dérivé du bois multicouche étant exempt de sulfonate de lignine.

13. Utilisation de sulfonate de lignine dans une couche externe d'un matériau dérivé du bois multicouche pour améliorer la résistance à la traction transversale du matériau dérivé du bois, le noyau du matériau dérivé du bois multicouche étant exempt de sulfonate de lignine.
